Europäisches Patentamt

European Patent Office

Office européen des brevets

(11) Veröffentlichungsnummer: **0 263 997**
**B1**

(12) **EUROPÄISCHE PATENTSCHRIFT**

(45) Veröffentlichungstag der Patentschrift:
23.05.90

(21) Anmeldenummer: 87113733.7

(22) Anmeldetag: 19.09.87

(51) Int. Cl.⁵: **B21F 27/10**

(54) Querdrahtzuführung zu einer Gitterschweissmaschine.

(30) Priorität: 15.10.86 DE 3635017

(43) Veröffentlichungstag der Anmeldung:
20.04.88 Patentblatt 88/16

(45) Bekanntmachung des Hinweises auf die Patenterteilung:
23.05.90 Patentblatt 90/21

(84) Benannte Vertragsstaaten:
AT BE CH DE FR GB IT LI NL

(56) Entgegenhaltungen:
AT-B- 213 205
DD-A- 203 482
DE-B- 1 253 215
DE-B- 2 550 044

(73) Patentinhaber: Emil Jäger GmbH & Co. KG,
Dahlweg 105, D-4400 Münster(DE)

(72) Erfinder: Schulte, Karl, Kuckucksweg 18,
D-4440 Rheine 11(DE)

(74) Vertreter: Habbel, Hans-Georg, Dipl.-Ing.,
Postfach 3429 Am Kanonengraben 11,
D-4400 Münster(DE)

**Beschreibung**

Die Erfindung bezieht sich auf eine Gitterschweißmaschine mit einem Längsdrahtvorschub und einer Querdrahtzuführung gemäß dem Oberbegriff des Patentanspruches 1.

Aus der DE-AS 12 53 215 ist eine Maschine zum Herstellen von geschweißten Drahtgittern aus sich rechtwinklig kreuzenden Längs- und Querdrähten mit einer Vielpunkt-Schweißeinrichtung bekannt. Diese Maschine ist mit einem Querdrahtmagazin ausgerüstet, in welchem die Querdrähte hintereinandergestapelt liegen. An diesem Querdrahtmagazin sind eine Reihe von Hebeln gelenkig angeordnet, die nach Vollendung der Schweißung im Bereich der Kreuzungsstelle durch den neu angeschweißten Querdraht nach oben geschwenkt werden, so daß einerseits das geschweißte Drahtgitter vorgezogen werden kann, andererseits dadurch das Magazin einen neuen Querdraht freigibt, der im freien Fall zur Schweißstelle gelangt. Es ist offensichtlich, daß bei einer solchen bekannten Einrichtung die Produktionsgeschwindigkeit des Drahtgitters u.a. von der Zuführgeschwindigkeit der Querdrähte abhängt, die im freien Fall zur Schweißstelle gelangen, dann dort sicher gelagert werden müssen.

Um die Nachteile einer solchen bekannten Maschine zu vermeiden, ist es aus der AT-PS 213 205 bekannt, die Zuführung der Querdrähte über eine Vielzahl von Querdrahtzubringerscheiben durchzuführen, die mit mehreren zur Aufnahme der Querdrähte dienenden, in Winkelabständen längs des Scheibenumfanges vorgesehenen Querdrahtaufnahmeräumen ausgerüstet sind. Die Zuführung der Querdrähte zur Schweißstelle hängt also von der Umdrehungsgeschwindigkeit der Querdrahtzubringerscheiben ab, und um die Querdrähte in den Aufnahmeräumen sicher zu halten, sind im Bereich der Aufnahmeräume Federelemente angeordnet, die eine Lagesicherung der Querdrähte bewirken sollen. Trotz dieser Verbesserung und der damit erreichten höheren Produktionsgeschwindigkeit bestehen immer noch Schwierigkeiten hinsichtlich der korrekten Lagerung und Zuführung der Querdrähte im Bereich der Schweißelektroden. Um die Querdrähte sicher zuzuführen, müssen die Schweißelektroden relativ weit voneinander abgehoben werden, die Querdrähte müssen dann im Bereich der Schweißelektroden positioniert werden und erst dann können die Schweißelektroden wieder abgesenkt werden und den Schweißvorgang ausführen. Die Produktionsgeschwindigkeit derartiger Gitter hängt also vom Weg der Schweißelektroden ab, den diese ausführen müssen, um die korrekte Aufnahme und Lagerung des Querdrahtes zu gewährleisten.

Aus der hier gattungsbildenden DD-PS 203 482 ist eine Zuführ- und Arretiervorrichtung für Querdrähte an Gitterschweißmaschinen bekanntgeworden, bei welcher die Querdrähte in Aufnahmeräumen einer Querdrahtzubringerscheibe mittels eines Stegbleches geführt werden. Die Zubringerscheibe übergibt dann den Querdraht an eine aus dem Stegblech und einem Gegenhalter gebildete Klemmeinrichtung, und der Querdraht wird durch die bewegliche obere Elektrode in einen Klemmbereich geführt, der durch Andruckfedern gebildet ist. Bei dieser bekannten Anordnung ist ebenfalls ein sehr großer Elektrodenhub erforderlich, wodurch die Leistung der Maschine eingeschränkt wird.

Der Erfindung liegt die Aufgabe zugrunde, die gattungsgemäße Gitterschweißmaschine so zu verbessern, daß nur ein sehr geringer Elektrodenhub erforderlich ist, wodurch die Arbeitsgeschwindigkeit der Gesamtmaschine verbessert werden kann, und daß gleichzeitig das Abgeben des Querdrahtes aus dem Aufnahmeraum jeder Querdrahtzubringerscheibe zur Schweißstelle ohne einen schneidenden Effekt der Wand des Aufnahmeraumes auf den Querdraht bewirkt wird.

Diese Aufgabe wird in Verbindung mit den Oberbegriffsmerkmalen erfindungsgemäß durch die Lehre des kennzeichnenden Teiles des Patentanspruches 1 gelöst.

Die Erfindung schlägt also - mit anderen Worten ausgedrückt - vor, daß unter Beibehaltung der Querdrahtzubringerscheiben der Querdraht innerhalb der Querdrahtaufnahmeräume nicht mehr am Boden oder Tiefsten des Aufnahmeraumes gelagert wird, sondern während der Drehbewegung der Querdrahtzubringerscheibe bereits aus dem Tiefsten des Querdrahtaufnahmeraumes heraus angehoben wird. Im Bereich der Elektroden gelangt dann dieser in einer relativ unstabilen Stellung befindliche Querdraht, der nur einerseits von dem Stegblech und andererseits von der in Umdrehungsrichtung der Querdrahtzubringerscheibe gesehen rückwärtigen Wand des Querdrahtaufnahmeraumes gehalten wird, an einen Niederhalter, der den Querdraht federnd auf das Stegblech aufdrückt und dadurch die Lage des Querdrahtes stabilisiert. Der Querdraht wird also eingeklemmt. Trotz dieses Einklemmens wird der Querdraht weiter durch die Querdrahtzubringerscheibe in den Bereich der Schweißstelle geführt und gelangt hier gegen einen Gegenhalter, der genau die Lage des Querdrahtes festlegt. Die äußere Umfangskante der Querdrahtzubringerscheibe liegt dabei am Querdraht an und hält ihn auch fest. Unmittelbar vorher wurde der Querdraht aus dem Querdrahtaufnahmeraum freigegeben und zu diesem Zeitpunkt kann die obere Elektrode sich auf die untere Elektrode zubewegen und damit den Querdraht mit dem Längsdraht verschweißen. Der Aufnahmeraum zwischen den beiden Elektroden ist also relativ klein einstellbar, so daß nur ein geringer Elektrodenhub erforderlich ist. Das beeinflußt natürlich die Schweißgeschwindigkeit der gesamten Gitterschweißmaschine.

Anschließend wird durch Zug am Längsdraht der Gegenhalter angehoben und gibt dabei die Schweißstelle frei, ähnlich wie dies bei der Einrichtung gemäß der DE-AS 12 53 215 der Fall ist. Während des Vorschubs des geschweißten Gitters transportiert aber bereits die Quedrahtzubringerscheibe wieder den nächsten Querdraht nach vorne in den Bereich der Elektroden, so daß unmittelbar bei Erreichen des nächsten Schweißpunktes durch die Längsdrähte, schon wieder der nächste Querdraht für seine unmittelbare Zuführung zur Schweißstelle zur Verfügung steht.

Vorteilhafte Ausgestaltungen der Erfindung sind Gegenstand der Unteransprüche.

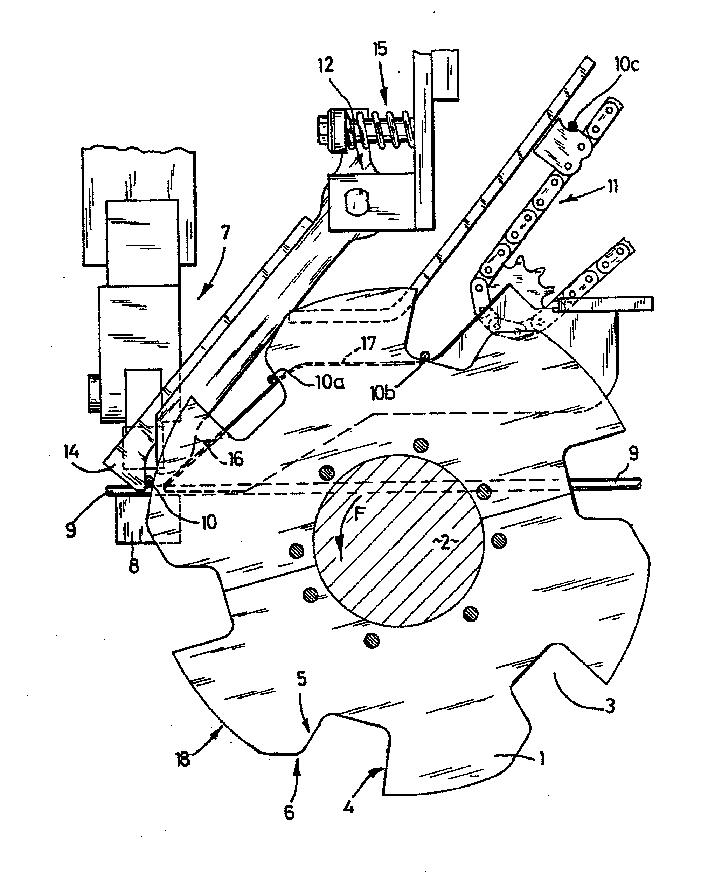

Ein Ausführungsbeispiel der Erfindung wird nachfolgend anhand der Zeichnung beschrieben.

Die Zeichnung zeigt dabei relativ schematisch die Ansicht auf eine Querdrahtzubringerscheibe, wobei ausdrücklich darauf hinzuweisen ist, daß natürlich eine Vielzahl solcher Querdrahtzubringerscheiben mit den zugeordneten Elementen fluchtend hintereinander auf einer Welle angeordnet sind.

In der Zeichnung ist mit 1 eine Querdrahtzubringerscheibe bezeichnet, die auf einer Welle 2 angeordnet ist, die in Richtung des Pfeiles F umläuft. Die Querdrahtzubringerscheibe 1 weist Querdrahtaufnahmeräume 3 auf, die eine in Umdrehungsrichtung gesehen relativ geradlinige radialgerichtete Vorderwand 4 und eine Rückwand 5 aufweisen, wobei der obere Bereich zwischen der Rückwand 5 und der Umfangslinie der Querdrahtzubringerscheibe bei 6 abgeflacht ausgebildet ist, und zwar in Umdrehungsrichtung gesehen nach hinten fluchtend.

Mit 7 und 8 sind zwei zusammenwirkende Schweißelektroden bezeichnet, wobei die obere Schweißelektrode 7 einen kurzen Hub ausführen kann, um die Schweißstelle freizugeben bzw. um auf die zu verschweißen den Drähte geführt zu werden. Mit 9 ist ein Längsdraht und mit 10 ein sich im Bereich der Schweißstelle befindender Querdraht bezeichnet, wobei ein weiterer Querdraht 10a in einem der Querdrahtaufnahmeräume 3 dargestellt ist. Ein weiterer Querdraht 10b ist in einen Querdrahtaufnahmeraum 3 von einem Querdrahtförderer 11 abgegeben und schließlich befindet sich ein weiterer Querdraht 10c auf dem Querdrahtförderer.

Etwa oberhalb der Dreh- und Tragwelle 2 für die Querdrahtzubringerscheibe befindet sich eine Haltevorrichtung, die auf einer Schwenkwelle 12 schwenkbar einen Gegenhalter 14 trägt. Der Gegenhalter 14 ist dabei gegen die Kraft einer Druckfeder 15 verschwenkbar, und zwar in der Zeichnung nach oben verschwenkbar, wobei er in der Zeichnung in seiner tiefsten Lage dargestellt ist. Die Schwenkwelle 12 trägt weiterhin einen Niederhalter 16, der ebenfalls federnd von der Schwenkwelle 12 getragen wird. Da der Niederhalter 16 bei der Darstellung durch die Querdrahtzubringerscheibe 1 verdeckt ist, ist er gestrichelt im unteren Bereich dargestellt.

Hinter der Querdrahtzubringerscheibe 1 ist schließlich ein Stegblech 17 vorgesehen, das bezüglich der Querdrahtaufnahmeräume 3 so angeordnet ist, daß dadurch der Querdraht 10b aus seiner tiefsten Lage in die Lage des Querdrahtes 10a angehoben wird und noch ein weiteres Anheben im Bereich kurz vor der Schweißstelle erfährt.

Die Wirkungsweise der vorbeschriebenen Einrichtung ist wie folgt:

Die Querdrahtzubringerscheibe 1 läuft vorzugsweise konstant um. In gleicher Weise wird der Querdrahtförderer 11 angetrieben und die von dem Querdrahtförderer 11 getragenen Querdrähte 10c werden in einen Querdrahtaufnahmeraum 3 der Querdrahtzubringerscheibe 1 abgelegt, so wie dies für den Querdraht 10b dargestellt ist. Durch weitere Drehung der Querdrahtzubringerscheibe 1 wird der Querdraht 10b in die Stellung des Querdrahtes 10a verbracht und durch die Rückwand 5 des Aufnahmeraumes 3, aber über das Stegblech 17 nach vorne zur eigentlichen Schweißstelle gefördert und dabei immer weiter vom Tiefsten des Querdrahtaufnahmeraumes 3 angehoben.

Vor der Schweißstelle gelangt der Querdraht 10a in Kontakt mit dem Niederhalter 16. Der Niederhalter 16 wird durch den Querdraht 10a angehoben und preßt dabei den Querdraht auf das Stegblech 17 auf, d.h. irgendwelche Schwingungs- oder Vibrationsbewegungen des Querdrahtes, der sich ja über eine relativ große Länge erstreckt, werden dadurch aufgehoben. Auf diese Weise wird eingeklemmt zwischen Stegblech 17, Rückwand 5 und Niederhalter 16 der Querdraht 10a in die Position des Querdrahtes 10 hineingepreßt. Die Höhenlage des Querdrahtes 10 wird dadurch nach unten hin durch den Längsdraht 9 begrenzt und es ist ersichtlich, daß die Schweißelektrode 7 nur um ein Maß anheben muß, das geringfügig größer als das des Querdrahtes ist, d.h. der Hub der Schweißelektrode 7 kann relativ klein sein. Im Bereich zwischen der Schweißelektrode 7 und der Gegenelektrode 8 kommt der Querdraht 10 zur Anlage an den Gegenhalter 14 und wird dadurch exakt lagebestimmt festgelegt, wobei diese genaue Lage nicht nur durch ein freies Anlegen des Querdrahtes 10 an dem Gegenhalter 14 erfolgt, sondern gleichzeitig wird dieser Querdraht 10 in seiner Lage auch durch die Umfangsfläche 18 der Querdrahtzubringerscheibe fixiert.

Sobald sich der Querdraht 10 in der dargestellten Lage befindet, kann die Elektrode 7 ihre Bewegung nach unten ausführen und jeden Schweißvorgang einleiten.

Durch den an sich bekannten Zug an den Längsdrähten 9 wird dann das verschweißte Gitter um eine Arbeitsbreite weiter nach vorne gezogen und hierbei schiebt der verschweißte Querdraht 10 den Gegenhalter 14 nach oben, der sich dabei um die Schwenkwelle 12 bewegen kann, und zwar unter Kompression der Druckfeder 15.

**Patentansprüche**

1. Gitterschweißmaschine mit einem Längsdrahtvorschub und einer Querdrahtzuführung, mit ober- und unterhalb der Kreuzungsstellen zwischen Längsdrähten (9) und Querdrähten (10) angeordneten Schweißelektroden (7, 8), wobei die Querdrahtzuführung über Querdrahtzubringerscheiben (1) erfolgt, die jeweils mit mehreren zur Aufnahme der Querdrähte dienenden, in Winkelabständen längs des Scheibenumfanges vorgesehen, zum Scheibenumfang offenen Querdrahtaufnahmeräumen (3) versehen sind, wobei jeder Querdrahtzubringerscheibe (1) ein ortsfestes Stegblech (17) zugeordnet ist, an dem der in den Querdrahtaufnahmeraum (3) eingeführte Querdraht (10b) während eines Teiles des Umlaufes der Querdrahtzubringerscheibe (1) anliegt und durch das der Querdraht (10b; 10a; 10) zu den Schweißelektroden geführt wird und wobei im Bereich der Schweißelektroden (7, 8) für jede Querdrahtzubringerscheibe (1) ein Gegenhalter (14) für den Querdraht (10) vorgesehen ist, dadurch ge-

kennzeichnet, daß jedes Stegblech (17) den im Querdrahtaufnahmeraum (3) angeordneten Querdraht aus dem Querdrahtaufnahmeraumtiefsten anhebt, im Bereich unmittelbar vor den Schweißelektroden (7, 8) für jede Querdrahtzubringerscheibe (1) ein federnder Niederhalter (16) vorgesehen ist, der den vom Querdrahtaufnahmeraum (3) und dem Stegblech (17) geführten Querdraht (10b, 10a) auf das Stegblech (17) aufpreßt, der Gegenhalter (14) federnd gelagert ist und durch den Zug am verschweißten Gitter den mit dem Längsdraht verschweißten Querdraht freigibt und der Querdrahtaufnahmeraum (3) in Drehrichtung der Querdrahtzubringerscheibe (1) gesehen eine sich im wesentlichen radial erstreckende geradlinige Vorderwand (4) aufweist, während der in Umfangsrichtung der Querdrahtzubringerscheibe (1) gesehene rückwärtige Rand (5) in Umdrehungsrichtung gesehen zumindest im oberen Teil entgegen der Drehrichtung abgeflacht (bei 6) ausgebildet ist

2. Maschine nach Anspruch 1, dadurch gekennzeichnet, daß der Gegenhalter (14) auf einer in Vorschubrichtung des geschweißten Gitters gesehen rückwärtig der Schweißelektroden angeordneten Schwenkwelle (12) schwenkbar gegen die Rückstellkraft einer Druckfeder (15) gelagert ist.

3. Maschine nach Anspruch 2, dadurch gekennzeichnet, daß auf der Schwenkwelle (12) auch der Niederhalter (16) gelagert ist, der gegen die Rückstellkraft einer Feder unabhängig von der Schwenkbewegung des Gegenhalters (14) schwenkbar angeordnet ist.

## Claims

1. Trellis-welding machine comprising a longitudinal-wire advancing means and a transverse-wire feed, with welding electrodes (7, 8) disposed above and below the crossing points between longitudinal wires (9) and transverse wires (10), wherein the transverse-wire feed takes place by means of transverse-wire delivery discs (1) which are each formed with a plurality of spaces (3) located at angular distances along the periphery of the disc and open towards the periphery of the litter to receive the transverse wires, there being associated with each transverse-wire delivery disc (1) a fixedly located web plate (17), against which the transverse wire (10b) introduced into the transverse-wire reception space (3) bears during a part of the rotation of the transverse-wire delivery disc (1) and by which the transverse wire (10b; 10a; 10) is guided to the welding electrodes, and wherein a hold-on (14) for the transverse wire (10) is provided in the region of the welding electrodes (7, 8) for each transverse-wire delivery disc (1), characterised in that each web plate (17) lifts the transverse wire situated in the transverse-wire reception space (3) from the lowermost position in the latter, there is provided in the region immediately before the welding electrodes (7, 8) for each transverse-wire delivery disc (1) a resilient holding-down device (16) by which the transverse wire (10b, 10a) guided by the space (3) which receives it and by the web plate (17) is pressed on to the said web plate, the hold-on (14) is resiliently mounted and, as a result of the pull exerted on the welded trellis, releases the transverse wire welded to the longitudinal wire, and the transverse-wire reception space (3), as seen in the direction of rotation of the transverse-wire delivery disc (1), has a substantially radially extending rectilinear front wall (4), while the rear edge (5), as seen in the peripheral direction of the transverse-wire delivery disc (1), is flattened, as seen in the direction of rotation, at least in the upper part (at 6), oppositely to the direction of rotation.

2. Machine according to claim 1, characterised in that the hold-on (14) is so mounted on a pivot (12) situated to the rear of the welding electrodes, as seen in the direction of advance of the welded trellis, as to be rockable against the restoring force of a compression spring (15).

3. Machine according to claim 2, characterised in that the holding-down device (16) also is mounted on the pivot (12) and is adapted to rock against the restoring force of a spring independently of the rocking movement of the hold-on (14).

## Revendications

1. Machine à souder les grillages comprenant un dispositif d'avance des fils longitudinaux et un dispositif d'amenée des fils transversaux, des électrodes de soudage (7, 8) agencées au-dessus et au-dessous des points d'intersection entre les fils longitudinaux (9) et les fils transversaux (10), l'amenée des fils transversaux étant assurée au moyen de disques (1) d'amenée des fils transversaux dont chacun est muni de plusieurs poches (3) de réception des fils transversaux, qui servent à recevoir les fils transversaux, sont prévues à intervalles angulaires le long de la circonférence du disque, et s'ouvrent vers la circonférence du disque, cependant qu'à chaque disque (1) d'amenée des fils transversaux, est associée une tôle fixe (17) contre laquelle le fil transversal (10b) introduit dans la poche (3) de longement du fil transversal s'appuie pendant une partie de la rotation du disque (1) d'amenée des fils transversaux et sous l'effet de laquelle le fil transversal (10b; 10a; 10) est acheminé aux électrodes de soudage, cependant qu'une contre-retenue (14) du fil transversal (10) est prévue dans la région des électrodes de soudage (7, 8) pour chaque disque (1) d'amenée des fils transversaux, caractérisée en ce que chaque tôle (17) soulève le fil transversal disposé dans la poche (3) de logement du fil transversal au-dessus du point le plus profond de la poche de logement du fil transversal, en ce que, dans la région située immédiatement en amont des électrodes de soudage (7, 8), il est prévu, pour chaque disque (1) d'amenée des fils transversaux, un presseur élastique (16) qui presse sur la tôle (17) le fil transversal (10b, 10a) guidé par la poche (3) de logement du fil transversal et par la tôle (17), le contre-appui (14) étant monté élastiquement et libérant, sous l'effet de la traction exercée sur le grillage soudé, le fil transversal qui a été soudé au fil longitudinal, et en ce que la poche (3) de logement du fil transversal présente, dans le sens de la rotation du disque (1) d'amenée du fil transversal, une paroi avant (4) rectiligne, qui s'étend sensiblement radialement, tandis que la paroi arrière (5), considérée dans le sens de la circonférence du disque (1) d'amenée du fil transversal, est aplatie (en 6) à l'encontre du sens de la rotation, considéré dans le sens de la rotation, au moins dans sa partie supérieure.

2. Machine selon la revendication 1, caractérisée en ce que le contre-appui (14) est monté pour osciller à l'encontre de la force de rappel d'un ressort de compression (15) sur un arbre oscillant (12) agencé en arrière des électrodes de soudage, considéré dans le sens de l'avance du grillage soudé.

3. Machine selon la revendication 2, caractérisée en ce que, sur l'arbre oscillant (12) est aussi monté le presseur (16) qui est agencé pour osciller, à l'encontre de la force de rappel d'un ressort, indépendamment du mouvement d'oscillation du contre-appui (14).